Europäisches Patentamt

(19) European Patent Office

Office européen des brevets

(11) Numéro de publication: **0 019 570**
**B1**

(12) # FASCICULE DE BREVET EUROPEEN

(45) Date de publication du fascicule du brevet:
06.04.83

(51) Int. Cl.³: **B 65 G 69/18**

(21) Numéro de dépôt: 80420062.4

(22) Date de dépôt: 14.05.80

(54) **Dispositif pour la manutention sans poussière de produits pulvérulents.**

(30) Priorité: 18.05.79 FR 7913543

(43) Date de publication de la demande:
26.11.80 Bulletin 80/24

(45) Mention de la délivrance du brevet:
06.04.83 Bulletin 83/14

(84) Etats contractants désignés:
CH DE GB LI NL SE

(56) Documents cités:
DE-C-838 720
FR-A-2 335 432
FR-A-2 422 574
US-A-4 061 221

(73) Titulaire: ALUMINIUM PECHINEY, 28, rue de Bonnel,
F-69433 Lyon Cedex 3 (FR)

(72) Inventeur: Hanrot, Jean-Pascal, 7 La Clairmande La
Mère de Dieu Brûlée, F-13100 Aix-En-Provence (FR)
Inventeur: Volpeliere, Jacky, Allée des Genêts Quartier
Gassin, Mimet F-13120 Gardanne (FR)

(74) Mandataire: Gaucherand, Michel et al, PECHINEY
UGINE KUHLMANN 28 rue de Bonnel, F-69433 Lyon
Cedex 3 (FR)

Dispositif pour la manutention sans poussière de produits pulvérulents

L'invention concerne un dispositif de manutention destiné au chargement de produits pulvérulents ou granuleux, contenant une certaine proportion de poussières, qui permet d'empêcher celles-ci de s'envoler et de les capter.

Lorsqu'on constitue un tas de produit pulvérulent en faisant descendre celui-ci dans une tubulure verticale placée au-dessus du tas, on provoque une forte émission de poussières extrêmement gênante pour le personnel présent, surtout lorsque ceci se passe dans une enceinte fermée telle qu'une cale de navire.

On a donc tenté de remédier à cela en munissant l'extrémité basse de la tubulure d'une corolle évasée reposant sur le tas et en aspirant l'air chargé en poussière à l'intérieur de la corolle.

Adoptant cette technique et voulant empêcher cette corolle pesante d'être ensevelie dans le matériau lorsque le tas grossit, la demanderesse a proposé dans la demande de brevet français FR-A-2422574, de réduire le poids de l'appareillage en réalisant une structure allégée en boudins gonflables accrochée à la tubulure d'alimentation.

La présente invention concerne un autre mode de réalisation d'un dispositif de manutention à tubulure verticale avec aspiration des poussières, comportant un tube central de descente du produit pulvérulent, un tube concentrique externe de remontée des poussières, une corolle axiale ouverte à ses deux extrémités et allant en s'évasant vers le bas, placée à la base des deux tubes concentriques précités, une conduite d'aspiration piquée sur le tube concentrique externe permettant de mettre sous dépression ledit tube, enfin, un système de postionnement en hauteur de l'ensemble du dispositif qui se caractérise en ce que:
— le tube concentrique externe est serré dans sa partie supérieure sur le tube interne,
— une cloche fermée est placée autour du tube externe qui la traverse et auquel elle est liée de façon étanche à un niveau supérieur et à un niveau inférieur, ces deux niveaux étant situés de part et d'autre d'orifices filtrants de communication au tube externe entre la conduite d'aspiration et la cloche mise ainsi sous dépression par l'aspiration, ladite cloche étant limitée par une surface supérieure dont la périphérie externe délimite une aire constante et par une surface inférieure déformable, de préférence souple, qui est suspendue entre la périphérie externe de la surface supérieure et la liaison au niveau inférieur de la cloche avec le tube externe,
— la corolle, ouverte à ses deux extrémités, évasée vers le bas, est accrochée par la périphérie de son ouverture supérieure à la surface inférieure de la cloche, le long d'une ligne intermédiaire entre le tube externe et la périphérie externe de la surface supérieure et dont l'ouverture inférieure a une section plus petite que la plus grande section horizontale de la cloche.

Le guidage du tube central et du tube extérieur est avantageusement assuré par des plats longitudinaux, par exemple trois plats répartis à 120° à l'intérieur du tube extérieur.

Dans une variante préférée, la conduite d'aspiration débouche dans le tube extérieur à un niveau situé entre la partie supérieure et les orifices filtrants du tube extérieur. Ces orifices filtrants, qui font communiquer l'intérieur de la cloche avec le tube extérieur, sont destinés à transmettre la dépression à l'intérieur de la cloche. On les munit d'écrans filtrants pour empêcher le passage dans la cloche des poussières qui, aspirées par la dépression, montent de la corolle dans le tube extérieur puis dans la conduite d'aspiration. Ces écrans ont aussi un rôle amortisseur vis-à-vis de la dépression.

Le tube extérieur peut être prolongé à son extrémité inférieure par une portion maillée destinée à empêcher la surface inférieure de la cloche d'être aspirée dans l'espace entre les deux tubes.

La jonction entre la surface supérieure de la cloche et le tube extérieur est articulée pour supporter une inclinaison notable, par exemple 15°, de la cloche par rapport à la verticale.

La partie supérieure de la cloche est, de préférence, en stratifié de polyester rigide. Mais, d'autres formes ou conceptions sont possibles à condition que l'aire délimitée par la périphérie externe demeure constante et que la surface inférieure puisse remonter à l'intérieur de la surface supérieure (effet de piston). Ainsi, la surface supérieure peut être réalisée, par exemple, en toile montée sur ressorts (parapluie) ou sur boudins gonflés.

La surface inférieure de la cloche peut être constituée de deux portions coniques en tissu imperméable très résistant, la première reliant l'extrémité supérieure de la corolle à la périphérie de la cloche, la seconde reliant cette même extrémité à la périphérie du tube extérieur. Le rôle de cette surface souple est de permettre un certain déplacement de la corolle posée sur le tas de produit pulvérulent dont le niveau monte régulièrement, par rapport à la cloche. Celle-ci est remontée périodiquement, de façon à redonner de la course à la corolle lorsque le besoin s'en fait sentir.

La corolle peut être réalisée en matériau rigide ou en structure gonflable de boudins juxtaposés. Si son profil idéal est une parabole, qui lui conférerait la meilleure stabilité théorique par abaissement de son centre de gravité, en pratique, ce profil est composé de portions courbes et rectilignes successives constituant approximativement un profil parabolique. Leur inclinaison sur l'horizontale diminue au fur et à mesure que l'on descend. De préférence, la dernière portion fait avec l'horizontale au niveau le plus bas un angle voisin de l'angle de talus du matériau à manutentionner.

On a constaté que l'écoulement du matériau hors de la corolle se faisait mieux si la surface interne de ladite corolle était fluidisée. Il est donc avantageux de tapisser de cartouches de fluidisation la surface interne rigide, par exemple en doublant cette surface d'une toile poreuse en tissu synthétique et en envoyant dans l'espace intermédiaire un débit d'air adapté. Il faut prendre soin que l'air diffuse sur toute la surface et que ne se créent pas des circuits préférentiels. On peut aussi disposer de place en place des manches poreuses horizontales, à condition qu'elles ne forment par de renflements trop importants susceptibles de gêner l'écoulement du matériau. D'autres dispositions sont possibles et laissées à l'appréciation de l'homme du métier.

Dans le cas d'une corolle à structure gonflable, une solution consiste en ce que la partie de chaque boudin faisant face à la zone à fluidiser soit réalisée en tissu synthétique poreux. Du fait de l'échappement permanent de l'air vers l'intérieur de la cloche, la pression de gonflage des boudins sera dans ce cas inférieure à la pression usuelle dans ce genre de structure.

La dépression que l'on fait régner dans la cloche a pour effet de participer à la sustentation de la corolle, de section plus faible et reposant sur le tas de matériau. Cette sustentation, créée par le ventilateur d'aspiration des poussières, est stable car elle n'est pas tributaire de l'énergie de descente du matériau et de ses fluctuations.

Les dimensions de la corolle sont imposées par les conditions d'emploi de l'appareil. Le choix de sa structure détermine alors son poids. Ces données et la valeur de la dépression de fonctionnement permettent de calculer la section maximale de la cloche.

Il faut remarquer que la corolle constitue une chambre où sont émises les poussières résultant de la chute du matériau. Du fait de la dépression, l'air extérieur entre sous la corolle, mais l'atmosphère de la corolle ne peut pas en sortir. Les poussières ne se dispersent donc pas dans l'enceinte en cours de remplissage.

Malgré la dépression sous la corolle, l'effet de ventouse est compensé par l'effet de sustentation de la cloche. Le système est auto-équilibré. En effet, lorsque la corolle s'approche du tas, la section de passage d'air entre son ouverture inférieure et le tas diminue, la perte de charge augmente ainsi que la dépression dans la corolle et dans la cloche. Alors, du fait de la différence de section entre cloche et corolle, la surface inférieure de la cloche soulève la corolle jusqu'à rétablir une distance entre tas et corolle qui corresponde à l'équilibre.

La description qui suit d'un exemple non limitatif de réalisation d'un dispositif de l'invention et de sa mise en œuvre permettra d'en mieux comprendre la constitution, le fonctionnement et les avantages.

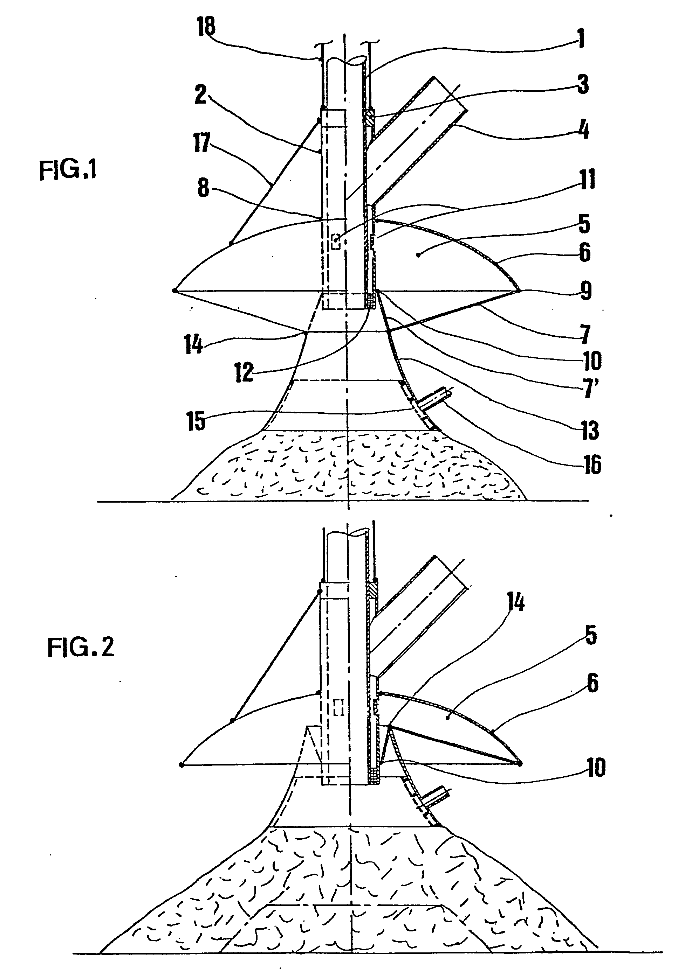

Les figures 1 et 2 représentent en 1/2 élévation - 1/2 coupe axiale, un dispositif selon l'invention, destiné à la manutention d'alumine, avec la corolle respectivement en position basse puis en position haute pour une même position de la partie supérieure du dispositif, c'est-à-dire aux deux extrémités de la course de la corolle.

(1) est le tube central, en caoutchouc armé, de diamètre 0,40 m.

(2) est le tube extérieur concentrique en stratifié de polyester, de diamètre 0,50 m, serré sur le tube central par le collier (3).

(4) est la conduite reliant le tube extérieur (2) au ventilateur d'aspiration non représenté, produisant une dépression de 15 mm dans la cloche (5). Le volume de cette cloche est compris entre une surface supérieure rigide (6) et une surface inférieure souple (7) (7'). La surface supérieure (6), réalisée en stratifié, est articulée sur le tube extérieur (2) le long de la ligne (8) avec une possibilité d'inclinaison de 15°. La surface inférieure (7) (7'), realisée en tissu imperméable souple, est fixée à sa périphérie extérieure en (9) (diamètre 3,50 m) à la surface supérieure (6) et à sa périphérie intérieure en (10) au tube extérieur (2).

(11) sont les orifices du tube extérieur (2), munis d'écrans filtrants faisant communiquer l'intérieur de la cloche (5) avec ledit tube extérieur (2) en dépression.

(12) est un panier de protection, grillagé, sans fond, qui prolonge le tube extérieur (2) pour empêcher la toile (7) (7'), d'être aspirée et d'obturer le passage d'air.

La distance verticale entre les lignes (8) et (10) est de 0,70 m.

(13) est la corolle, ici en stratifié. Elle est accrochée le long de la ligne (14) à la surface inférieure de la cloche (5). Son profil est sensiblement parabolique. Sa hauteur est de 0,50 m. Le diamètre de son ouverture supérieure est de 0,80 m. Le diamètre de son ouverture inférieure est de 1,80 m. Au niveau de cette ouverture inférieure, l'angle de la surface de la corolle avec l'horizontale est de 30°. La corolle est tapissée, à l'intérieur et sur une hauteur de 0,40 m, d'une toile de fluidisation (15). De l'air comprimé est alimenté par (16) entre corolle et toile, avec un débit de 2 $Nm^3/mn/m^2$, de façon à améliorer l'écoulement du produit hors de la corolle. Des haubans (17) soutiennent la surface supérieure (6) de la cloche.

(18) représente la suspension du dispositif à un portique de relevage.

Sur la figure 1, l'alumine descendant par le tube central (1) a constitué un tas sur lequel repose la corolle (13), en fin de course basse. Au fur et à mesure que l'alumine arrive dans la corolle (13), elle a tendance à s'écouler au dehors grâce à la fluidisation par l'air comprimé (16), et le tas prend de la hauteur. Comme le poids de la corolle (13) est équilibré par l'action de la dépression dans la cloche (5), à la surface inférieure de laquelle est suspendue la corolle, celle-ci flotte sur le tas de matériau et monte avec lui, jusqu'à parvenir en fin de course haute dans la position de la figure 2. A ce moment, la partie supérieure de la corolle (13) a monté d'environ 0,80 m par rapport à la position de la figure 1 qui a été indiquée partiellement en bas de la figure 2. On est alors obligé de remonter l'ensemble du dispositif grâce à la suspension (18) pour revenir à la géometrie de départ.

La poussière provoquée par la descente libre du produit dans le tube central (1) est aspirée vers un filtre par le tube extérieur (2) et la conduite (4). Elle n'envahit donc pas l'enceinte dans laquelle arrive le produit, cale de navire par exemple. D'autre part, le produit qui arrive sur le tas est bien désaéré. Avec ce dispositif, l'effet de ventouse de la corolle sur le tas ne s'est pas produit, permettant ainsi une exploitation régulière d'un débit de 1200 t/h.

Enfin, on a vérifié que le produit s'écoule correctement de la corolle sur le tas, même si cette dernière prend une inclinaison sur le tas pouvant aller jusqu'à 25° sur l'horizontale.

## Revendications

1. Dispositif de manutention de produit pulvérulent formé d'un tube central (1) de descente du produit, d'un tube concentrique externe (2) de remontée des poussières, d'une corolle (13) axiale ouverte à ses deux extrémités et allant en s'évasant vers le bas, placée à la base des deux tubes concentriques (1 et 2), d'une conduite d'aspiration (4) piquée sur le tube concentrique externe (2) permettant de mettre sous dépression ledit tube, enfin, d'un système de positionnement en hauteur (18) de l'ensemble du dispositif, caractérisé en ce que:
— le tube concentrique externe (2) est serré dans sa partie supérieure sur le tube interne (1),
— une cloche fermée (5) est placée autour du tube externe (2) qui la traverse et auquel elle est liée de façon étanche à un niveau supérieur et à un niveau inférieur, ces deux niveaux étant situés de part et d'autre d'orifices filtrants de communication (11) du tube externe (2), entre la conduite d'aspiration (4) et la cloche (5) mise ainsi sous dépression par l'aspiration, tandis que ladite cloche (5) és limitée par une surface supérieure (6) dont la périphérie externe délimite une aire constante et par une surface inférieure déformable (7), qui est suspendue entre la périphérie externe de la surface supérieure (6) et la liaison au niveau inférieur de la cloche avec le tube externe (2),
— la corolle (13), évasée vers le bas, est accrochée par la périphérie de son ouverture supérieure à la surface inférieure (7) de la cloche (5) le long d'une ligne intermédiaire entre le tube externe (2) et la périphérie externe de la surface supérieure (6), et dont l'ouverture inférieure a une section plus petite que la plus grande section horizontale de la cloche.

2. Dispositif selon la revendication 1, où la surface de la cloche (5) est en tissu imperméable.

3. Dispositif selon l'une des revendications 1 et 2, où la surface inférieure (7) de la cloche (5) est formée de deux parties tronconiques orientées en sens inverse.

4. Dispositif selon la revendication 3, où la corolle (13) est accrochée le long de la ligne de raccordement des deux parties de la surface inférieure (7) de la cloche (5).

5. Dispositif selon l'une des revendications 1 à 4, où la liaison de la corolle (13) avec la surface inférieure (7) de la cloche (5) est articulée.

6 Dispositif selon l'une des revendications 1 à 5, où la liaison supérieure de la cloche (5) et du tube externe (2) est articulée.

7. Dispositif selon l'une des revendications 1 à 6, où la surface supérieure (6) de la cloche est accrochée par des haubans (17) au tube extérieur.

8. Dispositif selon l'une des revendications 1 à 7, où le profil de la corolle (13) est sensiblement parabolique.

9. Dispositif selon l'une des revendications 1 à 8, où la surface intérieure de la corolle (13) est fluidisée au moins en partie par le moyen (15) de fluidisation.

10. Dispositif selon l'une des revendications 1 à 9, où la corolle (13) a une structure gonflable.

11. Dispositif selon l'une des revendications 1 à 10, où le guidage relatif du tube central (1) et du tube externe (2) est assuré par des plats longitudinaux.

12. Dispositif selon l'une des revendications 1 à 11, où le tube central (1) est prolongé vers le bas par une partie maillée.

13. Dispositif selon l'une des revendications 1 à 12, où la conduite d'aspiration (4) débouche dans le tube externe (2) à un niveau situé entre la partie supérieure et les orifices filtrants (11) du tube externe (2).

## Patentansprüche

1. Fördervorrichtung für ein pulveriges Produkt, bestehend aus einem zentralen Fallrohr (1) für das Produkt, einem konzentrischen Aussenrohr (2) für den aufsteigenden Staub, einem axialen, an beiden Enden geöffneten und zum Boden hin erweiterten Trichter (13), angeordnet an der Basis der beiden konzentrischen Rohre (1) und (2), einer von dem konzentrischen Aussenrohr (2) abgehenden Absaugleitung (4), mit der dieses Rohr unter Unterdruck gesetzt werden kann und einem System (18) zum Hochstellen der gesamten Vorrichtung, dadurch gekennzeichnet, dass:
— das konzentrische Aussenrohr (2) in seinem oberen Bereich an das Innenrohr (1) angeklemmt ist,
— eine geschlossene Glocke (5) um das Aussenrohr (2) angeordnet ist, das durch sie hindurchgeht und mit dem sie auf einer oberen und einer unteren Ebene dicht verbunden ist, wobei diese beiden Ebenen zu beiden Seiten von Verbindungsöffnungen (11) mit Filterwirkung im Aussenrohr (2) zwischen der Absaugleitung (4) und der Glocke (5), die auf diese Weise durch das Absaugen unter Unterdruck gesetzt wird, angeordnet sind, während die Glocke (5) durch eine Oberseite (6), deren äussere Peripherie einen konstanten Flächenbereich begrenzt, und durch eine deformierbare Unterseite (7) begrenzt wird, die zwischen der Aussenperipherie der Oberseite (6) und der Verbindung auf der unteren Ebene der Glocke mit dem Aussenrohr (2) aufgehängt ist,
— der Konus (13), der nach unten hin geöffnet ist, durch die Peripherie seiner oberen Öffnung an die Unterseite (7) der Glocke (5) angehängt ist, entlang einer Zwischenlinie zwischen Aussenrohr (2) und Aussenperipherie der Oberseite (6) und dessen untere Öffnung einen kleineren Querschnitt aufweist als der grösste horizontale Querschnitt der Glocke.

2. Vorrichtung nach Anspruch 1, bei der die Oberfläche der Glocke (5) aus einem dichten Stoff besteht.

3. Vorrichtung nach einem der Ansprüche 1 oder 2, bei der die Unterseite (7) der Glocke (5) aus zwei kegelstumpfförmigen, in entgegengesetzter Richtung orientierten Teilen besteht.

4. Vorrichtung nach Anspruch 3, bei der der Trichter (13) entlang der Linie der Verbindung der beiden Teile der Unterseite (7) der Glocke (5) befestigt ist.

5. Vorrichtung nach einem der Ansprüche 1 bis 4, bei der die Verbindung des Trichters (13) mit der Unterseite (7) der Glocke (5) gelenkig ausgebildet ist.

6. Vorrichtung nach einem der Ansprüche 1 bis 5, bei der die obere Verbindung der Glocke (5) mit dem Aussenrohr (2) gelenkig ausgebildet ist.

7. Vorrichtung nach einem der Ansprüche 1 bis 6, bei der die Oberseite (6) der Glocke mit Halteseilen (17) an dem Aussenrohr aufgehängt ist.

8. Vorrichtung nach einem der Ansprüche 1 bis 7, bei der das Profil des Trichters (13) im wesentlichen parabolisch ist.

9. Vorrichtung nach einem der Ansprüche 1 bis 8, bei der die Innenfläche des Trichters (13) zumindest teilweise durch das Mittel (15) für die Verwirbelung verwirbelt ist.

10. Vorrichtung nach einem der Ansprüche 1 bis 9, bei der der Konus (13) eine aufblasbare Struktur hat.

11. Vorrichtung nach einem der Ansprüche 1 bis 10, bei der die Führung des zentralen Rohres (1) und des Aussenrohres (2) zueinander durch Längs-Flachprofile sichergestellt ist.

12. Vorrichtung nach einem der Ansprüche 1 bis 11, bei der das zentrale Rohr (1) nach unten durch einen maschenförmigen Teil verlängert ist.

13. Vorrichtung nach einem der Ansprüche 1 bis 12, bei der die Absaugleitung (4) in das Aussenrohr (2) auf einer Ebene einmündet, die zwischen dem oberen Bereich und den filtrierenden Öffnungen (11) des Aussenrohres (2) angeordnet ist.

## Claims

1. Apparatus for handling powder substance, formed by a central pipe (1) for downward movement of the substance, an external concentric pipe (2) for the rising movement of dust, an axial corolla-like member (13) which is open at its two ends and which flares outwardly downwardly and which is disposed at the bottom of the two concentric pipes (1 and 2), a suction conduit (4) which is connected to the external concentric pipe (2) for producing a depression in said pipe, and finally, a system (18) for positioning the whole of the apparatus in respect of height, characterised in that:
— the external concentric pipe (2) is clamped in its upper portion on to the internal pipe (1),
— a closed bell-like member (5) is disposed around the external pipe (2) which passes therethrough and to which the bell-like member (5) is sealingly connected at an upper level and at a lower level, said two levels being disposed on respective sides of filtering communication apertures (11) in the external pipe (2), said apertures forming a communication between the suction conduit (4) and the bell-like member (5) in which a depression is thus created by the suction effect, while said bell-like member (5) is delimited by an upper surface (6), the outside periphery of which defines a constant area, and a lower deformable surface (7) which is suspended between the outside periphery of the upper surface (6) and the connection at the lower level between the bell-like member and the external pipe (2), and
— the downwardly outwardly flared corolla-like member (13) is engaged by the periphery of its upper opening to the lower surface (7) of the bell-like member (5) along a line which is intermediate between the external pipe (2) and the external periphery of the upper surface (6), the lower opening thereof being smaller in section than the largest horizontal section of the bell-like member.

2. Apparatus according to claim 1, wherein the surface of the bell-like member (5) is of impermeable fabric.

3. Apparatus according to one of claims 1 and 2, wherein the lower surface (7) of the bell-like member (5) is formed by two oppositely oriented frusto-conical portions.

4. Apparatus according to claim 3, wherein the corolla-like member (13) is connected along the line joining the two portions of the lower surface (7) of the bell-like member (5).

5. Apparatus according to one of claims 1 to 4, wherein the connection between the corolla-like member (13) and the lower surface (7) of the bell-like member (5) is pivoted.

6. Apparatus according to one of claims 1 to 5, wherein the upper connection between the bell-like member (5) and the external pipe (2) is pivoted.

7. Apparatus according to one of claims 1 to 6, wherein the upper surface (6) of the bell-like member is fastened to the external pipe by means of guys (17).

8. Apparatus according to one of claims 1 to 7, wherein the corolla-like member (13) is of substantially parabolic configuration.

9. Apparatus according to one of claims 1 to 8, wherein the internal surface of the corolla-like member (13) is fluidised at least in part by the fluidisation means (15).

10. Apparatus according to one of claims 1 to 9, wherein the corolla-like member (13) is of an inflatable structure.

11. Apparatus according to one of claims 1 to 10, wherein the central pipe (1) and the external pipe (2) are guided relative to each other by means of longitudinal flats.

12. Apparatus according to one of claims 1 to 11, wherein the central pipe (1) is extended downwardly by a mesh portion.

13. Apparatus according to one of claims 1 to 12, wherein the suction conduit (4) communicates with the external pipe (2) at a level between the upper portion and the filtering apertures (11) in the external pipe (2).

FIG.1

FIG.2